**Europäisches Patentamt**

**European Patent Office**

**Office européen des brevets**

(19)

(11) Veröffentlichungsnummer: **0 171 778**
**B1**

(12) # EUROPÄISCHE PATENTSCHRIFT

(45) Veröffentlichungstag der Patentschrift:
25.10.89

(21) Anmeldenummer: **85110078.4**

(22) Anmeldetag: **10.08.85**

(51) Int. Cl.⁴: **H 04 L 27/10,** H 04 L 27/26,
H 04 K 1/00, H 04 B 1/66

(54) **Verfahren zur Nachrichtenübertragung mittels Frequenzumtast-Modulation.**

(30) Priorität: **16.08.84 DE 3429959**

(43) Veröffentlichungstag der Anmeldung:
**19.02.86 Patentblatt 86/8**

(45) Bekanntmachung des Hinweises auf die Patenterteilung:
**25.10.89 Patentblatt 89/43**

(84) Benannte Vertragsstaaten:
**DE FR GB IT**

(56) Entgegenhaltungen:
**EP-A-0 068 690**
**EP-A-0 062 054**
**DE-A-3 046 803**
**GB-A-2 132 453**
**US-A-4 425 666**

(73) Patentinhaber: **Rohde & Schwarz GmbH & Co.**
**KG, Mühldorfstrasse 15, D-8000 München 80 (DE)**

(72) Erfinder: **Wessel, Anton, Trausnitzstrasse 36,**
**D-8000 München 36 (DE)**

(74) Vertreter: **Graf, Walter, Dipl.- Ing., Sckellstrasse 1,**
**D-8000 München 80 (DE)**

**Beschreibung**

Die Erfindung betrifft ein Verfahren zur Nachrichtenübertragung laut Oberbegriff des Hauptanspruches.

Die bekannte Frequenzumtast-Modulation (Frequency Shift Keying, FSK-Modulation) wird zur Nachrichtenübertragung nicht nur mit zwei Kennfrequenzen angewendet sondern in neuerer Zeit auch mit mehreren m Kennfrequenzen (m-ary FSK), beispielsweise mit vier verschiedenen Kennfrequenzen, zwischen denen zeitlich nacheinander umgetastet wird. Auf diese Weise ist es möglich, einen Informationsgehalt von mehr als 1 bit in einem Telegrafieschritt zu übertragen. Bei der bisher üblichen Frequenzumtast-Modulation sind die Kennfrequenzen sende- und empfangsseitig festgelegt und zum Teil sogar genormt. Durch bewusste oder unbewusste Störungen kann die Nachrichtenübertragung leicht beeinträchtigt werden.

Es ist Aufgabe der Erfindung, ein mit Frequenzumtast-Modulation arbeitendes Verfahren zur Nachrichtenübertragung bezüglich Störmöglichkeiten zu verbessern.

Diese Aufgabe wird ausgehend von einem Verfahren laut Oberbegriff des Hauptanspruches durch dessen kennzeichnende Merkmale gelöst. Vorteilhafte Weiterbildungen ergeben sich aus den Unteransprüchen.

Gemäss der Erfindung sind die verwendeten Kennfrequenzen im Sender bzw. Empfänger nicht mehr fest eingegeben sondern werden nach einem bestimmten System geändert. Damit ist von vornherein ein Erkennen und Stören einer so übertragenen Nachricht sehr erschwert und es kann ausserdem auch leicht bereits vorhandenen Störungen ausgewichen werden. Das erfindungsgemässe Verfahren ist sowohl im Kurzwellenbereich als auch für die Satellitenübertragung geeignet, und zwar für jegliche Art von Frequenzumtastung, sei es, dass diese nur mit beispielsweise 100 Hz im Kurzwellenbereich innerhalb einer üblichen 3 KHz-Bandbreite eines Übertragungskanals durchgeführt wird oder sei es, dass zwischen Frequenzen umgetastet wird, die einige MHz weit auseinander liegen.

Besonders vorteilhaft ist das erfindungsgemässe Verfahren im Zusammenhang mit dem Frequenzumtastverfahren im Kurzwellenbereich. Hierbei wird beispielsweise zwischen zwei oder mehreren m umgetastet, wobei diese Kennfrequenzen beispielsweise innerhalb einer üblichen Bandbreite von 3 KHz eines Kurzwellenkanals liegen. So ist es beispielsweise möglich zwischen acht verschiedenen beispielsweise jeweils um 200 Hz unterschiedlichen Kennfrequenzen f1 bis f8 umzutasten, die zu übertragende Nachricht (Telegrafiezeichen) ist bei diesem Frequenzumtastverfahren in der zeitlichen Aufeinanderfolge der einzelnen zur Verfügung stehenden Kennfrequenzen enthalten. Diese Kennfrequenzen können in der vorgegebenen Bandbreite nach einem bestimmten Raster von beispielsweise 200 Hz verteilt sein und gemäss der Erfindung werden zunächst m Kennfrequenzen aus diesem Raster ausgewählt und zur Nachrichtenübertragung benutzt. Die Kennfrequenzen müssen jedoch nicht in einem bestimmten Raster festliegen, es können auch beliebige Kennfrequenzen innerhalb der gegebenen Bandbreite ausgewählt werden. Zwischen verschiedenen Nachrichtenübertragungen bzw. Übertragungsabschnitten oder auch zu beliebiger Zeit während einer Nachrichtenübertragung werden gemäss der Erfindung dann andere m Kennfrequenzen aus dem vorgegebenen Raster oder frei innerhalb der vorgegebenen Bandbreite ausgewählt und die Nachrichtenübertragung erfolgt dann auf diesen geänderten Kennfrequenzen. Natürlich muss dieser Wechsel empfangsseitig bekannt sein. Dabei ist es nicht nur möglich, die verwendeten Kennfrequenzen zu ändern sondern es ist auch möglich, die verwendete Anzahl von Kennfrequenzen zu ändern. Dadurch ist es beispielsweise bei einem gerade sehr stark gestörten Frequenzband, bei dem nicht mehr alle ursprünglich ausgewählten Kennfrequenzen ungestört übertragen werden, möglich, anschliessend nur mit einer verringerten Anzahl von Kennfrequenzen störungsfrei zu übertragen, sofern auch diese Änderung der Anzahl der verwendeten Kennfrequenzen der Empfangsstation mitgeteilt wird.

Im einfachsten Fall wird von vornherein ein bestimmter Zeitplan für die Nachrichtenübertragung festgelegt, nach welchem die Kennfrequenzlage und deren Anzahl geändert werden. Eine andere Möglichkeit ist, während der Nachrichtenübertragung das in Betracht kommende Frequenzband fortlaufend oder stichpunktartig auf vorhandene Störungen zu untersuchen und in Abhängigkeit von diesen Feststellungen die Lage der Kennfrequenzen innerhalb des Frequenzbandes und auch die Anzahl m der verwendeten Kennfrequenzen entsprechend zu wählen. Die Untersuchung auf vorhandene Störungen kann entweder nur auf der Senderseite erfolgen, vorzugsweise wird sie jedoch gleichzeitig oder nur auf der Empfangsseite durchgeführt, sofern eine Möglichkeit der Rückmeldung vom Empfänger zum Sender in dem betreffenden Funkdienst gegeben ist.

Sender und Empfänger müssen beide über die in jedem Moment benutzten Kennfrequenzverteilungen und Anzahl m der verwendeten Kennfrequenzen gleiche Information besitzen. Im einfachsten Fall geschieht dies durch einen sende- und empfangsseitig bekannten festen Zeitplan. Es ist auch möglich, sende- und empfangsseitig eine Vielzahl von vorgegebenen festgelegten Zeitplänen vorzusehen und die Information, welcher Zeitplan zu welchem Zeitpunkt gerade benutzt werden soll, wie einen Chiffrierschlüssel zwischen Sender und Empfänger auszutauschen. Die jeweilige Kennfrequenzlage und Information über die Anzahl m kann beispielsweise auch vor einem durchzuführenden Wechsel entweder parallel zur Nachrichtenübertragung oder zeitlich mit dieser verschachtelt vom Sender zum Empfänger übertragen werden. Es ist auch möglich, dass der Empfänger sich durch ein bekanntes Frequenzmessverfahren die Kennfrequenzen selbst heraussucht, wie dies beispielsweise in der Funkaufklärung zur Feststellung von fremden Sendern üblich ist. Aus den so festgestellten Frequenzen innerhalb eines in Betracht kommenden Frequenzbandes kann so das jeweilige Kennfrequenzenmuster bestimmt werden, erleichtert wird dies dadurch, wenn empfangsseitig spezielle Kenntnisse der verwendeten Systemparameter vorhanden sind und zusätzlich auch eine grobe Kenntnis des üblichen Zeitplanes vorhanden ist.

Mit dem erfindungsgemässen Verfahren ist es möglich, eine bewusste Störung einer Nachrichtenübertragung zu verhindern, da dem Störer ja der Frequenzwechsel nicht bekannt ist. Ausserdem kann nach dem erfindungsgemässen Verfahren leicht vorhandenen Störungen ausgewichen werden, indem auf ungestörte Kennfrequenzen gewechselt wird.

Das erfindungsgemässe Modulationsverfahren unterscheidet sich grundsätzlich von dem bekannten Frequenzsprungverfahren (Frequency Hopping, z. B. EP-A-68 690), bei dem ein fertig modulierter Kanal (Trägerfrequenz) nach einem bekannten Plan in einem breiten Frequenzband zwischen unterschiedlichen Frequenzwerten schnell umgeschaltet wird. Beim erfindungsgemässen Verfahren wird eine ähnliche Technik beim eigentlichen Modulationsverfahren angewendet und das erfindungsgemässe Modulationsverfahren kann deshalb ohne weiteres zusätzlich noch mit dem bekannten Frequenzsprungverfahren kombiniert werden, indem beispielsweise der Hochfrequenzträger, der nach dem erfindungsgemässen Frequenzumtast-Modulationsverfahren moduliert ist, zusätzlich sprunghaft zwischen unterschiedlichen Frequenzwerten umgetastet wird.

**Patentansprüche**

1. Verfahren zur Nachrichtenübertragung mittels Frequenzumtast-Modulation, bei der senderseitig zwischen zwei oder mehreren empfangsseitig bekannten Bastisband-Kennfrequenzen umgetastet wird, dadurch gekennzeichnet, dass die Kennfrequenzen und/oder die Anzahl (m) der verwendeten Kennfrequenzen nach einem empfangsseitig bekannten Zeitplan geändert werden.

2. Verfahren nach Anspruch 1, dadurch gekennzeichnet, dass aus einem vorgegebenen Frequenzraster innerhalb eines vorbestimmten Frequenzbereiches nacheinander jeweils unterschiedliche Sätze einer vorbestimmten Anzahl (m) von Kennfrequenzen ausgewählt werden.

3. Verfahren nach Anspruch 1 oder 2, dadurch gekennzeichnet, dass die Kennfrequenzen und /oder deren Anzahl (m) in Abhängigkeit von den Übertragungsbedingungen innerhalb des verwendeten Frequenzbereiches, insbesondere von festgestellten Störungen der Nachrichtenübertrag, geändert wird.

4. Verfahren nach einem der vorhergehenden Ansprüche, dadurch gekennzeichnet, dass die senderseitig gewählten Kennfrequenzen und /oder die Anzahl (m) der Kennfrequenzen empfangsseitig durch ein bekanntes Frequenzsuchverfahren bestimmt werden.

**Claims**

1. Method for the transmission of communications using frequency shift keying, involving keying at the transmit end between two or a plurality of baseband code frequencies known at the receive end, characterised in that the code frequencies and/or the number (m) of code frequencies utilised are modified according to a time program known at the receive end.

2. Method according to claim 1, characterised in that in each case different sets of a predetermined number (m) of code frequencies are selected in succession from a preset RF channel arrangement within a predetermined frequency range.

3. Method according to claim 1 or 2, characterised in that the code frequencies and/or the number (m) thereof is modified in response to the transmission conditions within the frequency range utilised, more particularly to faults detected in the communication.

4. Method according to one of the preceding claims, characterised in that the code frequencies selected at the transmit end and/or the number (m) of code frequencies are determined at the receive end by a known frequency search procedure.

**Revendications**

1. Procédé de transmission d'informations au moyen d'une modulation par déplacement de fréquence, dans lequel, côté émetteur, on se déplace entre deux fréquences caractéristiques à bandes différentes connues du côté récepteur, caractérisé en ce que les fréquences caractéristiques et/ou le nombre (m) des fréquences caractéristiques utilisées sont modifiés selon un plan chronologique connu côté récepteur.

2. Procédé selon la revendication 1, caractérisé en ce qu'à partir d'un quadrillage de fréquence prédéterminée, on sélectionne les uns après les autres chacun des différents jeux d'un nombre (m) prédéterminée de fréquences caractéristiques.

3. Procédé selon la revendication 1 ou 2, caractérisé en ce que les fréquences caractéristiques et/ou leur nombre (m) sont modifiés en fonction des conditions de transmission à l'intérieur de la plage de fréquence utilisée, en particulier en fonction des perturbations constatées dans la transmission des informations.

4. Procédé selon l'une des revendications précédentes, caractérisé en ce que les fréquences caractéristiques et/ou le nombre des fréquences caractéristiques choisis côté émetteur sont déterminés côté récepteur par un procédé de recherche de fréquence connu.